# EUROPÄISCHE PATENTANMELDUNG

(11) **EP 1 293 719 A2**
(43) Veröffentlichungstag der Anmeldung: **19.03.2003**
(21) Anmeldenummer: 02020635.5
(22) Anmeldetag: 13.09.2002
(51) Int. Cl.: F16L 55/10, F16L 37/32, F16L 29/00, B67D 5/32

(54) **Vorrichtung zum Betanken eines Streufahrzeuges**

(30) Priorität: 13.09.2001 DE 20115170 U
(71) Anmelder: Titus Wintermantel GmbH, 78199 Bräunlingen (DE)
(72) Erfinder: Wintermantel, Titus, 78199 Bräunlingen (DE); Kukoschke, Karl-Gustav, Dr., 38116 Braunschweig (DE)
(74) Vertreter: Patentanwälte Westphal, Mussgnug & Partner

(57) **Zusammenfassung**

Eine Vorrichtung zum Betanken eines Streufahrzeugs mit Salzsole weist einen Verladeschlauch (9), der an eine Pumpe (4) eines Lagertanks (LB1) angeschlossen ist, und eine Anschlusskupplung (14,16) zum Anschließen an den Tank (FB) des Streufahrzeuges (7) auf. Die Anschlusskupplung (14,16) ist als Trockenkupplung ausgebildet. Der Verladeschlauch (9) weist eine Abreißkupplung (18) auf, deren Abreißkraft geringer ist als die Abreißfestigkeit des Verladeschlauchs (9) und deren Kupplungshälften (19) als Trockenkupplungen ausgebildet sind.

## Beschreibung

Die Erfindung betrifft eine Vorrichtung zum Betanken eines Streufahrzeugs gemäß dem Oberbegriff des Anspruchs 1.

Im Winterdienst werden öffentliche Verkehrswege teilweise mit Salz gestreut. Dabei wird einerseits Trockensalz verwendet und andererseits beim Nasssalzen eine Salzsole. Hierzu weisen die Streufahrzeuge Tanks auf, die in einem Vorratslager aus einem Lagertank mit der Salzlösung befüllt werden.

Bisher ist es üblich, die Salzsole aus dem Lagertank über eine Pumpe und einen Spiralschlauch in die Tanks der Streufahrzeuge zu verladen. Der Verladeschlauch ist fest an der Pumpe angeschlossen. Der Verladeschlauch wird an die Tanks der Streufahrzeuge mittels einer Bajonettkupplung angekuppelt, wobei hinter der Kupplung schlauchseitig ein Absperrschieber vorgesehen ist. Dieser Absperrschieber wird manuell geöffnet und geschlossen. In den Tanks der Streufahrzeuge sind Grenzwertgeber eingebaut, die parallel zu dem Verladeschlauch über eine Kabelverbindung angeschlossen werden. Bei gefülltem Tank unterbricht der Grenzwertgeber den Kontakt und die Pumpe der Verladestation wird ausgeschaltet.

Bei diesen bekannten Verladestationen tritt das Problem auf, dass beim Abkuppeln des Verladeschlauchs Sole ausläuft. Ebenso kann Sole auslaufen, wenn der Verladeschlauch nicht richtig angekuppelt ist oder beim Abkuppeln vergessen wird, den Absperrschieber zu schließen. Außerdem kann auch Sole auslaufen, wenn der Verladeschlauch gewaltsam abgerissen wird. Dies kann beispielsweise geschehen, wenn das Streufahrzeug wegfährt, ohne dass zuvor der Verladeschlauch abgekuppelt wurde. Ebenso kann der Verladeschlauch durch andere Fahrzeuge der Verladestation, zum Beispiel Gabelstapler oder dergleichen abgerissen wird. Die auslaufende Salzlösung stellt eine erhebliche Umweltbelastung dar.

Der Erfindung liegt die Aufgabe zugrunde, eine Vorrichtung zum Betanken eines Streufahrzeugs mit Salzsole zu schaffen, die ein Auslaufen von Salzsole weitestgehend ausschließt.

Diese Aufgabe wird erfindungsgemäß gelöst durch eine Vorrichtung mit den Merkmalen des Anspruchs 1.

Vorteilhafte Ausführungen und Weiterbildungen der Erfindung sind in den Unteransprüchen angegeben.

Erfindungsgemäß ist der Verladeschlauch mit einer Trockenkupplung als Anschlusskupplung für das Streufahrzeug ausgebildet. Das eine automatisch abschliessende betätigbare Kupplungsteil ist dabei an dem Verladeschlauch angeordnet. Das dazu passende zweite Kupplungsteil, welches ebenfalls selbstschließend ist, ist an dem Streufahrzeug montiert. Dadurch wird gewährleistet, dass beim Lösen der Anschlusskupplung zwangsläufig das an dem Verladeschlauch angeordnete Kupplungsteil absperrt. Beim Trennen der Kupplung kann daher keine Sole aus dem Verladeschlauch auslaufen. Insbesondere ist es nicht notwendig, vor dem Trennen der Anschlusskupplung manuell einen Absperrschieber zu schließen. Es ist daher auch ausgeschlossen, dass Sole nach dem Trennen der Anschlusskupplung ausläuft, weil vergessen wird, den Absperrschieber zu schließen. Eine Fehlbedienung ist somit ausgeschlossen.

Weiter weist der Verladeschlauch eine Abreißkupplung auf, deren Kupplungshälften jeweils als abschließende Trockenkupplungen ausgebildet sind. Die Abreißkraft der Abreißkupplung ist geringer als die Abreißfestigkeit des Verladeschlauchs. Hierdurch wird verhindert, daß durch Gewalteinwirkung der Verladeschlauch abreißt und Sole ausläuft. Wirkt Gewalt auf dem Verladeschlauch ein, so ist durch die Abreißkupplung sicher gestellt, dass vor einem Abreißen des Verladeschlauchs, was zu einem Auslaufen der Salzsole führen würde, die Abreißkupplung getrennt wird, wobei die beiden Kupplungshälften der getrennten Abreißkupplungen sofort automatisch absperren und ein Auslaufen der Sole sowohl pumpenseitig als auch fahrzeugseitig verhindern. Auch ein Anfahren des Streufahrzeugs bei angekuppeltem Verladeschlauch oder ein Abreißen durch ein anderes Fahrzeug können nicht zu einem Auslaufen der Salzsole führen.

Vorzugsweise wird als Verladeschlauch ein hoch verschleißfester Schlauch verwendet, dessen Reißfestigkeit etwa das doppelte der Abreißkraft der Abreißkupplung beträgt. Beispielsweise kann eine Abreißkupplung verwendet werden, deren Abreißkraft als Sollbruchstelle ca. 850 kg beträgt. Dies entspricht etwa 50 bis 60 % der Reißfestigkeit des verwendeten Verladeschlauchs.

Eine zusätzliche Sicherheit wird erfindungsgemäß dadurch erreicht, daß in die von dem Lagertank zu dem Verladeschlauch führende Pumpleitung ein elektrischer Absperrschieber eingesetzt ist. Dieser elektrische Absperrschieber ist an das elektrische Anschlusskabel für den Grenzwertgeber des Streufahrzeugs angeschlossen. Sind die Tanks des Streufahrzeugs gefüllt, so wird durch das Signal des Grenzwertgebers nicht nur die Pumpe des Lagertanks abgeschaltet, sondern auch der elektrische Absperrschieber geschlossen. Reißt der Verladeschlauch, so wird auch das an den elektrischen Grenzwertgeber gesteckte Anschlußkabel abgerissen. Das Abreißen des elektrischen Anschlusskabels führt dabei ebenfalls zu einem Abschalten der Pumpe und zu einem gleichzeitigen Schließen des elektrischen Absperrschiebers. Zusätzlich kann ein akustisches und/oder optisches Warnsignal ausgelöst werden.

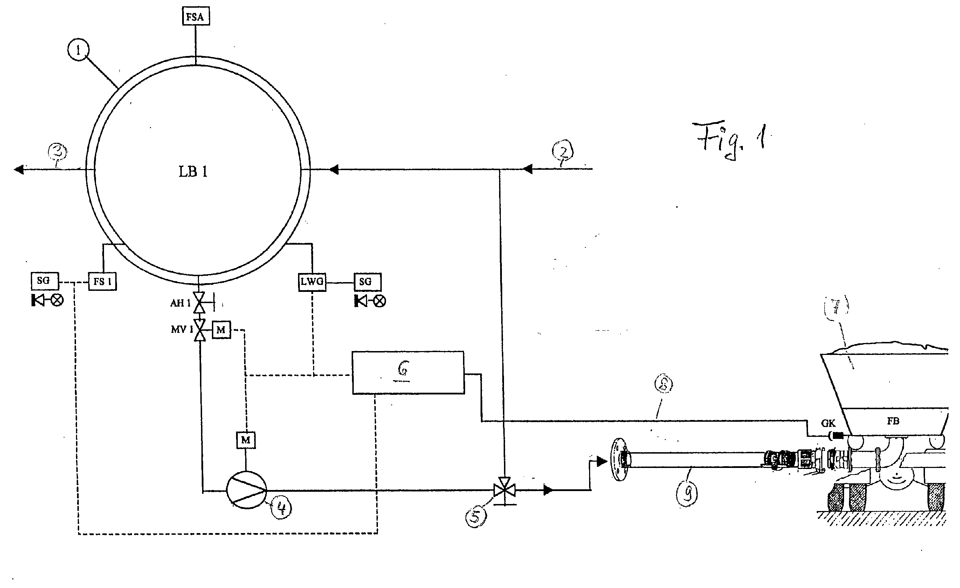

Im folgenden wird die Erfindung anhand eines in der Zeichnung dargestellten Ausführungsbeispiels näher erläutert. Es zeigen
Fig. 1: schematisch das gesamte System zum Betanken eines Streufahrzeugs und
Fig. 2: den Verladeschlauch im einzelnen.

In einem Vorratslager, zum Beispiel einem Bauhof und einer Strassenmeisterei wird die Salzsole für das Nasssalzen im Winterdienst in einem Lagertank LB1 gelagert. Der Lagertank LB1 ist als doppelwandiger Tank mit einem Überwachungsraum 1 zwischen den Wandungen ausgebildet. Der Lagertank LB1 wird über eine Leitung 2 befüllt,wobei über eine Leitung 3 entlüftet werden kann. Weiter weist Lagertank LB1 eine Füllstandsanzeige FSA auf. Weiter ist der Lagertank LB1 mit einer Überfüllsicherung FS1 und einem Leckwarngerät LWG ausgestattet, die jeweils mit optischen und/oder akustischen Signalgeräten SG verbunden sind.

Die flüssige Salzlösung wird aus dem Lagertank LB1 über eine Absperrklappe MV1 mittels einer Pumpe 4 an eine Entnahmestelle 5 gepumpt. Die Überfüllsicherung FS1 und das Leckwarngerät LWG sind an eine Steuerung 6 angeschlossen, welche in Alarmfalle über Stellmotoren M die Absperrklappe MV1 schließt und die Pumpe 4 abschaltet.

Zum Betanken eines Streufahrzeugs 7 wird dieses an die Entnahmestelle 5 gefahren. Der Tank FB des Streufahrzeugs wird über einen Verladeschlauch an die Entnahmestelle 5 angeschlossen. Weiter wird ein Grenzwertgeber des Tanks FB über eine Steckkupplung GK und ein elektrisches Anschlusskabel 8 an die Steuerung 6 angeschlossen. Ist der Tank FB voll, so gibt der Grenzwertgeber ein Signal, welches über das Anschlusskabel 8 zu der Steuerung 6 geführt wird, worauf die Steuerung die Absperrklappe MV1 schließt und die Pumpe abschaltet.

Insoweit entspricht das System dem bekannten Stand der Technik.

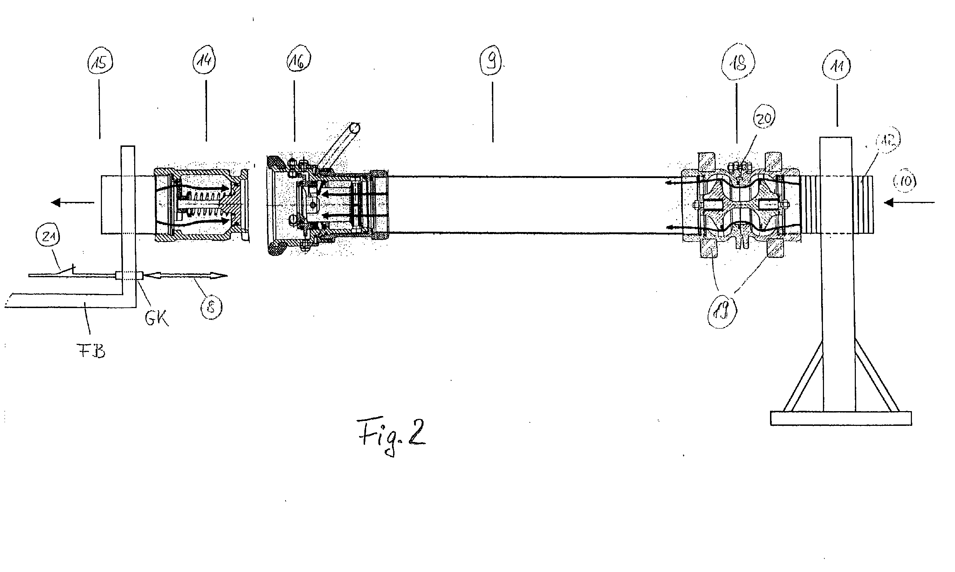

Erfindungsgemäß erfolgt das Befüllen des Tanks FB des Streufahrzeugs über einen Verladeschlauch 9, wie er im einzelnen in Figur 2 dargestellt ist.

An der Entnahmestelle 5 wird die von der Pumpe 4 kommende Pumpleitung 10 an einem Halter 11 befestigt. Vorzugsweise ist in den Halter 11 ein Gewindenippel 12 fest eingesetzt, an welchem die Pumpleitung 10 angeschlossen wird. Der Halter 11 ist als stabiler Metallrahmen ausgebildet, der am Erdboden befestigt ist, beispielsweise einbetoniert ist. Der Halter 11 dient insbesondere als Zugentlastung für die Pumpleitung 10. An den Gewindenippel 12 des Halters 11 wird der Verladeschlauch 9 angeschlossen. Der Verladeschlauch 9 ist ein hoch verschleißfester Schlauch mit einer Reißfestigkeit von beispielsweise etwa 1500 bis 2000 kg.

Der Verladeschlauch 9 wird mit einer Anschlußkupplung an den Tank FB des Streufahrzeugs 7 angeschlossen. Die Anschlußkupplung ist als Trockenkupplung ausgebildet, deren Vaterteil 14 mit einer Muffe 15 an den Tank FB angeschlossen ist. Das Mutterteil 16 der Anschlußkupplung ist am Ende des Verladeschlauchs 9 angebracht. Das Mutterteil 16 der Anschlußkupplung weist eine Verriegelung 17 auf. Zum Ankuppeln des Verladeschlauchs 9 an den Tank FB werden das Mutterteil 16 und das Vaterteil 14 zusammengesteckt und mechanisch miteinander verriegelt. Das Mutterteil 17 ist durch einen Dichtungsteller abgedichtet verschlossen. Das Vaterteil ist durch einen federbelasteten Dichtungsteller dichtend verschlossen. Beim Verriegeln der Anschlußkupplung wird der Dichtungsteller des Mutterteils 16 axial von seinem Dichtungssitz abgehoben und drückt gleichzeitig den Dichtungsteller des Vaterteils 14 gegen die Federkraft in die Offenstellung. Durch das mechanische Kuppeln der Anschlußkupplung wird diese gleichzeitig geöffnet. Zum Trennen der Anschlußkupplung muss die Verriegelung wieder gelöst werden, wobei der Dichtungsteller des Mutterteils 16 zwangsläufig wieder in die Schließstellung gebracht wird und den Dichtungsteller des Vaterteils 14 freigibt, so dass dieser durch die Federbelastung ebenfalls in die Schließstellung gelangt. Die Ausbildung der Anschlußkupplung als Trockenkupplung gewährleistet zuverlässig, dass bei einem Trennen der Anschlußkupplung zwangsläufig sowohl der Verladeschlauch 9 als auch der Tank FB dicht abgeschlossen sind.

Weiter ist in den Verladeschlauch 9 eine Abreisskupplung 18 eingesetzt. Die Abreißkupplung 18 weist zwei Kupplungshälften 19 auf, die durch Abreißbolzen 20 zusammengehalten werden. Die Abreißbolzen 20 weisen eine geringere Abreißfestigkeit auf als der Verladeschlauch 9, so dass die Abreißbolzen 20 und damit die Abreißkupplung 18 eine Sollbruchstelle für den Verladeschlauch 9 bilden. Beispielsweise beträgt die Abreißkraft der Abreißbolzen 20 ca. 850 kg. Die Kupplungshälften 19 der Abreißkupplung 18 sind ebenfalls als Trockenkupplung ausgebildet. Hierzu weisen die Kupplungshälften 19 jeweils einen Dichtungsteller auf, der durch Federkraft in die Schließstellung gedrückt wird. Beim Zusammensetzen der Abreißkupplung mittels der Abreißbolzen 20 drücken sich die Dichtungsteller der beiden Kupplungshälften 19 gegenseitig gegen ihre jeweilige Federkraft in die Offenstellung. Reißen die Abreißbolzen 20, so dass die Abreißkupplung 18 getrennt wird, so stützen sich die Dichtungsteller der beiden Kupplunshälften 19 nicht mehr gegenseitig ab und werden jeweils durch ihre Federkraft in die Schließstellung gedrückt.

Bei Gewalteinwirkung auf den Verladeschlauch 9 reißt dieser zuerst an der Abreißkupplung 18, wobei sich bei einem Abreißen der Abreißkupplung 18 die beiden Kupplungshälfte 19 sofort zwangsläufig dichtend schließen.

Reißt der Verladeschlauch 9 bei Gewalteinwirkung, so reißt auch das elektrische Anschlusskabel 8, welches an den Grenzwertgeber 21 in dem Tank FB des Fahrzeugs 7 angeschlossen ist. Das Reißen des Anschlußkabels 8 führt über die Steuerung 6 zu einem Schließen der Absperrklappe MV1 und zu einem Abschalten der Pumpe 4. Erfindungsgemäß kann zusätzlich noch ein Absperrhahn AH1 an dem Lagertank LB1 in die Saugleitung zu der Pumpe eingesetzt sein. Das Signal der Anschlußleitung 8 schließt auch diesen Absperrhahn AH1 sofort. Ist der Tank FB voll, was durch den Grenzwertgeber 21 signalisiert wird, oder reißt das Anschlußkabel 8 durch Gewalteinwirkung, so wird nicht nur die Pumpe 4 abgeschaltet und die Absperrklappe MV1 geschlossen, sondern auch die Saugleitung der Pumpe zusätzlich durch den Absperrhahn AH1 geschlossen. Ebenso wird das akustische und/oder optische Warnsignal des Signalgeräts SG ausgelöst.

## Patentansprüche

1. Vorrichtung zum Betanken eines Streufahrzeugs mit Salzsole, mit einem Verladeschlauch, der an eine Pumpe eines Lagertanks angeschlossen ist und eine Anschlusskupplung zum Anschließen an den Tank des Streufahrzeugs aufweist,
**dadurch gekennzeichnet, dass** die Anschlusskupplung (14, 16) als Trockenkupplung ausgebildet ist und dass der Verladeschlauch (9) eine Abreißkupplung (18) aufweist, deren Abreißkraft geringer ist als die Abreißfestigkeit des Verladeschlauchs (9) und deren Kupplungshälften (19) als Trockenkupplungen ausgebildet sind.

2. Vorrichtung nach Anspruch 1,
**dadurch gekennzeichnet, dass** die Anschlusskupplung ein an dem Streufahrzeug (7) angebrachtes federbelastet schließendes Kupplungsteil (14) und ein an dem Verladeschlauch (9) angebrachtes Kupplungsteil (16) aufweist, wobei beim Verriegeln der Trockenkupplung dieses Kupplungsteils (16) öffnet und die Trockenkupplung des fahrzeugseitigen Kupplungsteils (14) gegen eine Federkraft öffnet.

3. Vorrichtung nach Anspruch 1 oder 2,
**dadurch gekennzeichnet, dass** die Kupplungshälften (19) der Abreißkupplung (18) durch Abreißbolzen (20) zusammengehalten werden, die die Sollbruchstelle bilden, und dass die Kupplungshälften (19) jeweils Dichtungsteller aufweisen, die unter Federkraft in die Schließstellung gedrückt werden und sich beim Zusammenbau der Abreißkupplung (18) gegenseitig gegen ihre jeweilige Federkraft in der Offenstellung halten.

4. Vorrichtung nach einem der vorhergehenden Ansprüche,
**dadurch gekennzeichnet, dass** der Verladeschlauch (9) an die von der Pumpe (4) kommende Pumpleitung (10) an einem Halter (11) anschlossen ist, der eine Zugentlastung für die Pumpleitung (10) bildet.

5. Vorrichtung nach einem der vorhergehenden Ansprüche,
**dadurch gekennzeichnet, dass** ein elektrisches Anschlusskabel (8) für einen Grenzwertgeber (21) des Tanks (FB) des Streufahrzeugs (7) bei mechanischer Unterbrechung ein Signal liefert, welches die Pumpe (4) abschaltet und eine Absperrung (MV1, AH1) in der Saugleitung von dem Lagertank (LB1) zu der Pumpe (4) schließt.
